# FASCICULE DE BREVET EUROPEEN

(11) **EP 0 789 048 B1**
(45) Date de publication et mention de la délivrance du brevet: **14.06.2006**
(21) Numéro de dépôt: 97400165.3
(22) Date de dépôt: 24.01.1997
(51) Int. Cl.: C08J 3/24

(54) **Polymères superabsorbants a structure coeur-coquille et leur procédé d'obtention**
Superabsorbierende Polymere mit einer Kern-Schale-Struktur und Verfahren zu deren Herstellung
Superabsorbent polymers with core-shell structure and process for preparing same

(30) Priorité: 07.02.1996 FR 9601502
(43) Date de publication de la demande: 13.08.1997
(73) Titulaire: Arkema, 92800 Puteaux (FR)
(72) Inventeur: Collette, Christian M., 75005 Paris (FR); Kowalik, Andre M., 60270 Gouvieux (FR); Hildago, Manuel M., 75017 Paris (FR); Puchois, Emmanuel M., 75019 Paris (FR)

(56) Documents cités:
- EP-A- 0 258 120
- EP-A- 0 441 507
- GB-A- 2 126 591
- GB-A- 2 267 094
- US-A- 5 486 569
- PATENT ABSTRACTS OF JAPAN vol. 95, no. 0001 & JP 07 026026 A (IDEMITSU PETROCHEM CO LTD)

## Description

La présente invention concerne des poudres de particules de polymères à haut pouvoir d'absorption d'eau et de fluides aqueux (ci-après superabsorbants ou SAP).

On s'intéresse ici aux propriétés de porosité des gels qui résultent de l'absorption des fluides aqueux par ces superabsorbants et à leur module mécanique. L'une des principales utilisations des superabsorbants est la réalisation d'articles d'hygiène dans lesquels la fonction absorbante est pour l'essentiel dévolue à des lits ou nappes de particules individuelles ou d'agglomérats de telles particules. Les performances absorbantes de la couche absorbante dépendent non seulement de la capacité d'absorption intrinsèque de la résine superabsorbante et de la porosité initiale des lits particulaires, mais encore de leur résistance au blocage qui se manifeste en cours d'utilisation par la perte de leur capacité d'absorption sous charge et par la réduction de la porosité sous l'effet de la pression ou consécutive au gonflement de la poudre. On conçoit ainsi tout l'intérêt de superabsorbants dont les particules de gel présenteraient un module élastique assez fort pour leur conférer une résistance suffisante à la déformation. A ce point de vue, les résines superabsorbantes classiques sont très insatisfaisantes.

Il est connu, selon le brevet GB 2 126 591, d'effectuer une post-réticulation de polymères hydrophiles possédant des groupes carboxyliques et/ou carboxylates avec un agent de réticulation polyfonctionnel, la teneur en eau du polymère étant ajustée entre 10 et 40% avant la réticulation.

Selon la demande de brevet JP07-026026, il n'est pas nécessaire de réduire la teneur en eau pour effectuer une réticulation de la surface de polymères superabsorbants, afin d'améliorer leurs capacités d'absorption et la rigidité de leurs gels.

Le brevet GB 2 267 094 décrit des particules de polymères superabsorbants réticulés dont les capacités d'absorption sont améliorées par l'augrnentation de la densité de réticulation à la surface de ces particules.

Il n'est pas inutile de rappeler ou de présenter ici les principes de mesure de ces diverses propriétés, puisqu'aussi bien c'est par l'observation et la comparaison de leurs résultats que l'on porte un jugement de qualité sur les produits disponibles et que s'expriment les insatisfactions qui appellent une solution technique nouvelle.

La granulométrie des particules de polymère superabsorbant est mesurée sur poudre sèche par tamisage.

La capacité intrinsèque de la résine superabsorbante s'obtient par le test dit du "tea-bag" (mesure des capacités d'absorption et de rétention par la méthode du "tea-bag", EDANA, Association Européenne des Non-Tissés, mesure des capacités d'absorption et de rétention par la méthode du "tea-bag"), test par lequel on mesure la reprise d'eau en poids par rapport au poids d'une résine sèche enfermée dans un sachet de papier thermoscellable, après immersion d'une vingtaine de minutes dans une solution aqueuse à 0,9 % de chlorure de sodium et égouttage une dizaine de minutes. Elle s'exprime en g de solution à 0,9 % de NaCl dans l'eau par g de SAP sec.

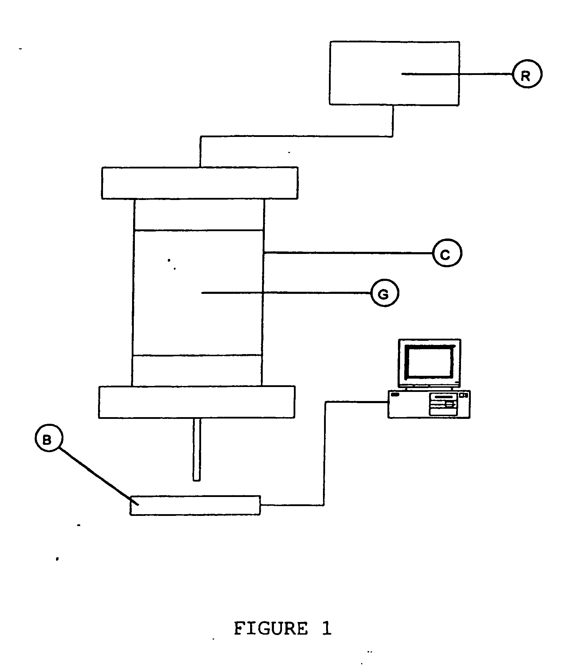

La mesure de la porosité d'un lit de gel gonflé est effectuée dans l'appareil représenté sur la figure 1. Pour cela, on gonfle 4g. de résine superabsorbante avec 35g. d'une solution aqueuse de chlorure de sodium à 0,9 % en poids. Le gel formé (G) est mis dans un conteneur (C) de 52 mm de diamètre et 55 mm de hauteur. Le conteneur est ensuite branché sur la ligne du réservoir (R) contenant la solution saline (NaCl 0,9 %), éventuellement colorée, et la quantité de solution qui arrive à traverser le gel est recueillie sur une balance (B) et pesée en continu. La pression du liquide traversant le lit (2,5 kPa) est maintenue constante par contrôle du niveau du réservoir d'alimentation. La masse de solution collectée en 10 minutes est considérée comme une mesure de la porosité du gel.

La mesure de l'absorption sous charge d'un lit épais de gel (c'est-à-dire de l'ordre du centimètre) est une variante de la mesure d'absorption sur lit mince (au grand maximum 0,5 cm), connue de l'homme du métier sous le nom d'AUL (Absorption Under Load), et qui se pratique avec un dispositif (dont on trouvera la description comme appareil de mesure de la capacité de succion capillaire sous pression SC, dans la demande de brevet EP-A1-0258120) dans lequel un verre fritté est placé en affleurement dans une cuve d'eau salée à 0,9 g, fritté sur lequel est posé un cylindre fermé à sa base par une feuille de non-tissé ; le cylindre est rempli de 0, 5 g. de SAP ; le SAP est chargé d'un poids pour en gêner la reprise de liquide. Le niveau du liquide est maintenu constant à la hauteur du point de contact entre la résine et le liquide. Le poids et la surface du cylindre contenant la résine sont choisis de manière à ce que la pression sur le superabsorbant soit de 5 kPa. Dans le dispositif utilisé dans les exemples rapportés ci-après, le poids utilisé a été de 1 Kg et le diamètre du cylindre contenant le superabsorbant a été de 5 cm, mais le cylindre a été chargé de 1,5 g de poudre superabsorbante, ce qui est une quantité convenable pour que le gel ait une épaisseur significative. L'augmentation de l'épaisseur du lit de gel est un obstacle important au gonflement global de la résine, les superabsorbants classiques ne répondent pas correctement à ce test. Ainsi l'absorption sous charge se mesure en g de solution à 0,9 % de NaCl dans l'eau par g de SAP sec.

### Mesure du module mécanique

Pour effectuer cette mesure, une particule sphérique individuelle de résine superabsorbante gonflée à l'équilibre par une solution aqueuse de chlorure de sodium à 0,9 % (en poids) est placée sur le fond d'une cellule transparente et est soumise à une contrainte de compression appliquée par un piston mobile dont le déplacement est mesuré. On opère dans une cellule transparente au sein d'un bain d'huile pour éviter toute perte du liquide de la particule par évaporation. On détermine un module de Hertz K en observant l'évolution du diamètre longitudinal déformé de la particule sous l'effet de la force appliquée au piston, en pratique l'évolution de la distance entre le piston au contact de la particule et le fond de la cellule, et la force F appliquée au piston, d'après la formule F (X) = 5 / 2 K Rₒ^{½}[Rₒ - X /2]^{3/2} où F(X) est la force appliquée au piston, X le rayon longitudinal déformé de la sphère et Rₒ le rayon initial (avant compression) de la particule sphérique gonflée.

Lorsque la poudre superabsorbante est constituée de grappes d'agglomérats, on procède encore sur des billes individuelles qu'on trouve toujours libres dans de telles poudres.

Des produits présentant une absorption saline suffisante sont accessibles, avec des absorptions sous charge plus ou moins acceptables, mais ils sont très insuffisants quant à la porosité au sens du présent brevet, c'est-à-dire porosité du lit gonflé. Ce que l'on souhaite est de disposer de superabsorbants offrant des porosités d'au moins 500, et préférentiellement d'au moins 1000 g.

La demanderesse a maintenant trouvé des polymères superabsorbants partiellement réticulés, se présentant sous forme d'une poudre. Plus précisément, la demanderesse a trouvé une poudre de particules à structure « coeur-coquille » qui sont constituées d'un polymère superabsorbant partiellement réticulé ayant un gradient de réticulation partielle tel que la coquille des particules soit plus dure et moins souple que le coeur de celle-ci, ladite poudre ayant une capacité d'absorption d'au moins 50 g/g d'eau saline à 0,9 % et un module mécanique supérieur à 35 000 Pa, dans laquelle un lit de gel de 1,5 g desdites particules a une capacité d'absorption d'eau saline d'au moins 20 g/g sous une charge de 5kPa et dans laquelle le lit de gel a une porosité d'au moins 500 g, et dans laquelle les particules ont une granulométrie comprise entre 30 et 1500 µm.

Les polymères superabsorbants auxquels s'adresse la présente invention sont préférentiellement les résines superabsorbantes polyacryliques, c'est-à-dire celles qui sont réalisées par polymérisation d'acide acrylique ou d'acide méthacrylique ou de leurs sels ; mais sans sortir du cadre de l'invention, le procédé revendiqué peut s'étendre aux résines obtenues à partir d'autres monomères hydrophiles tels que l'acrylamide, l'acide vinylsulfonique et ses sels, l'acide acrylamidométhylpropane sulfonique et ses sels, la N-vinyl-pyrolidone, l'acide styrène sulfonique et ses sels.

La granulométrie des SAP de l'invention peut varier de 30 à 1500 *µ*m. Cependant on préfère les SAP dont 90 % en poids des particules sont comprises entre 100 et 800 *µ*m. Il est recommandé aussi que le nombre de fines soit réduit autant que possible. Avantageusement, les SAP de l'invention ont un passant à 100 *µ*m inférieur à 1 %.

Les poudres de l'invention ont une stucture coeur-coquille, l'intérieur du grain étant plus ou moins souple et l'extérieur étant plus dur que le coeur.

De préférence l'absorption d'eau saline est comprise entre 50 et 57 g/g.

Avantageusement le module est supérieur à 35000 Pa et de préférence compris entre 35000 et 60000 Pa.

L'invention concerne aussi un procédé pour produire les SAP. II consiste essentiellement à contrôler la réticulation de grains de SAP déjà polymérisés qu'on appellera "post-réticulation" dans la suite du texte. Plus précisément l'invention concerne aussi un procédé de préparation d'une poudre de particules à structure « coeur-coquille » telle que définie dans l'une quelconque des revendications 1 à 8 dans lequel une post-réticulation à l'aide d'une solution aqueuse de l'agent de réticulation est appliquée à une poudre humide de particules dudit polymère superabsorbant en suspension dans l'heptane, de façon à obtenir un gradient de réticulation tel que la coquille des particules soit plus dure et moins souple que le coeur de celle-ci, la teneur en eau dudit polymère superabsorbant en suspension étant de 0,30 à 0,50 exprimée en poids d'eau rapporté au poids du polymère superabsorbant anhydre, ladite poudre ayant un module mécanique supérieur à 35000 Pa.

Selon le procédé de l'invention on assure un contrôle très strict de la teneur en eau du polymère au début de la phase de post-réticutation. Le paramètre de contrôle du procédé objet de la présente invention, est le rapport eau sur superabsorbant anhydre (RESA) à cet instant. Dans la présente invention, ce facteur RESA doit se trouver compris entre 0,30 et 0,50. On a vérifié dans les cas où la mesure d'un module est praticable, que l'on a une bonne corrélation entre ce module et la porosité, et qu'au moins en ce qui concerne les poudres de superabsorbants constituées de telles particules sphériques, ce module est un indicateur expérimental précieux. On visera des modules égaux ou supérieurs à 35.000 Pa.

L'invention consiste ainsi à appliquer un traitement de post-réticulation à l'aide d'une solution aqueuse de l'agent de réticulation à une poudre de polymère superabsorbant en dispersion dans un solvant dont la teneur en eau a été amenée de façon caractéristique à une valeur de 0,30 à 0,50, exprimée en poids d'eau rapporté au poids du polymère superabsorbant anhydre. L'introduction de l'agent de réticulation est faite sous agitation à une température d'environ 60 - 75°C. L'opération est décrite plus loin en détail comme séquence g, encadrée des séquences f et h.

La post-réticulation selon l'invention peut être appliquée à des poudres sèches de polymères préparées antérieurement, sans restriction quant à leur procédé d'obtention. Il est cependant particulièrement intéressant d'intégrer la post-réticulation aux procédés de synthèse de polymères superabsorbants obtenus par polymérisation en suspension inverse, tels qu'ils ont par exemple été décrits dans le brevet EP-441507 (SUMITOMO SEIKA CHEM CO) ou la demande européenne EP 742231 (ELF ATOCHEM S.A.), et d'enchaîner la post-réticulation avec l'étape de polymérisation en suspension inverse ou, si elle existe, l'étape d'agglomération des particules individuelles en suspension.

Les réticulants utiles pour la présente invention sont essentiellement des diglycidyléthers de diol. On préfère l'éthylèneglycoldiglycidyléther. Les quantités à utiliser sont d'au moins 500 ppm par rapport à la masse du polymère traité (ou si l'on veut, dans le cas où la post-polymérisation est une opération intégrée dans le processus complet d'obtention du superabsorbant, par rapport à la quantité de monomère hydrophile - l'acide acrylique entre autre - mis en oeuvre).

Le solvant est l'heptane.

On notera que lorsque le superabsorbant final est une poudre constitué d'agglomérats de particules, la post-réticulation peut intervenir tant avant l'agglomération qu'après. On-préfèrera cependant cette seconde pratique, la post-réticulation pouvant compromettre l'agglomération ultérieure.

Selon une forme avantageuse le procédé de l'invention est un procédé par polymérisation en suspension inverse avec agglomération des particules individuelles comprenant :
- une séquence a de préparation du milieu dispersif,
- une séquence b de préparation de la première solution de monomères,
- une séquence c d'introduction et de dispersion du monomère dans le milieu dispersif et sa polymérisation,
- une séquence d de préparation d'une deuxième solution de monomère dite solution agglomérante,
- une séquence e d'introduction de solution agglomérante dans le milieu dispersif où existe déjà en suspension une première population de particules individuelles polymérisées, et sa polymérisation,
- une séquence f d'élimination d'eau des agglomérats en suspension par entraînement azéotropique, avec recirculation du fluide hydrocarboné,
- une séquence g d'addition de l'agent réticulant pour la formation de la coquille,
- une séquence h (finale) d'évaporation de l'eau restante et du fluide hydrocarboné et récupération de la poudre obtenue.

### EXEMPLES

Les exemples qui suivent ont été présentés comme exemples et contre-exemples de préparations de superabsorbants. Les propriétés d'absorption de ces divers produits sont rassemblés et interprétés en fin de chapitre.

### Exemple 1 : obtention d'agglomérats de particules à structure coeur-coquille avec un coeur à gradient de réticulation.

### séquence a)

Dans un réacteur d'un litre muni d'un dispositif d'introduction de réactifs solides ou liquides, d'un système de condensation de vapeurs et de décantation des condensats avec possibilité de recirculation, d'un agitateur à pales, d'un système de balayage par gaz neutre, d'une sonde de température et d'un dispositif de chauffage/réfrigération constitué d'une double enveloppe dans laquelle circule un fluide caloporteur dont la température est assignable à une température de consigne, on place 258 g. d'heptane, et on introduit vers 80°C, sous agitation à 400 tours/minute et avec balayage d'azote, 1,06 g. de polyéthylène modifié par l'anhydride maléique (Hi-Wax 1105 A de Mitsui Petrochemical Industries Co et 0,52 g. de di/tristéarate de saccharose. La solution est maintenue à 80°C le temps nécessaire à la dissolution complète des ingrédients, après quoi, on ramène la température fixée à 70°C.

### séquence b)

Dans un autre réacteur d'un litre semblable au précédent, on introduit 86 g. d'une solution aqueuse à 80 % en poids d'acide acrylique et 127,10 g. de lessive de soude à 22,62 %, en procédant suffisamment lentement pour ne pas dépasser 30°C. A cette solution, on ajoute 2 g. de carboxyméthylcellulose puis 0,130 g. d'une solution à 2 % en poids d'éthylèneglycol-diglycidyléther, ainsi que 3,017 g. d'une solution aqueuse à 2 % de persulfate de potassium.

### séquence c)

Le réacteur avec la solution à base d'heptane étant maintenu sous agitation de 400 tours/minute et sous balayage d'azote, on y introduit rapidement la phase aqueuse précédemment préparée qui passe en suspension inverse dans l'heptane. L'introduction de la phase aqueuse dans le réacteur provoque une chute momentanée de la température du milieu, vite compensée par échange thermique avec la double enveloppe dont le fluide caloporteur est consigné à la température de 70°C. La polymérisation s'engage, dont l'exothermicité peut amener le milieu à une température momentanément plus élevée, que le même mécanisme ramène à la température de consigne de 70°C. Il se forme une suspension de polymère maintenue à cette température.

### séquence d)

Pendant le déroulement de la séquence précédente, on procède dans un réacteur équipé comme celui de la séquence a), à une neutralisation de 86 g. de solution aqueuse à 80 % en poids d'acide acrylique par 127,10 g. de lessive de soude à 22,62 %, en procédant suffisamment lentement pour ne pas dépasser la température de 30°C. A cette solution d'acide acrylique partiellement neutralisé (75 % en moles), on ajoute 2 g. de carboxyméthylcellulose et 0,46 g. d'une solution aqueuse à 10 % de nonylphénol éthoxylé à 50 moles d'oxyde d'éthylène (REMCOPAL 31250 de CECA SA.), puis 3 grammes d'une solution aqueuse à 2 % en poids de persulfate de potassium et 1,5 gramme d'une solution aqueuse à 2 % d'éthylèneglycol-diglycidyléther.

### séquence e)

La charge de monomère préparée dans la séquence d) ci-dessus est introduite goutte à goutte dans le réacteur tel qu'il est en fin de séquence c). La durée d'introduction est d'environ 30 -minutes. Le barbotage d'azote est maintenu, et la vitesse d'agitation est conservée dans la zone de 400-600 tours/minute. La température dans le réacteur tend à osciller du fait de l'introduction de la charge froide, puis de l'exothermicité de la réaction de polymérisation. On veille à ce que ces oscillations ne sortent pas de l'intervalle 63-73°C. En général, la consigne de la température du fluide caloporteur de la double enveloppe suffit à tempérer ces mouvements. Lorsque la charge a été complètement introduite, on monte la vitesse d'agitation à 800 tours/minute et le réacteur est maintenu dans ces conditions pendant une vingtaine de minutes. L'exothermicité de la polymérisation peut momentanément élever la température du réacteur, qui revient naturellement à la température de consigne du fluide caloporteur de la double enveloppe.

### séquence f)

La polymérisation de la deuxième charge étant terminée, la température de la double enveloppe est montée à 120 °C pour distiller le mélange heptane/eau, le dispositif recyclant la phase heptane dans le réacteur, et conservant visible dans le décanteur l'eau séparée. L'opération est poursuivie le temps nécessaire pour que le RESA du polymère contenu dans le réacteur atteigne la valeur de 0,40.

### séquence g)

La valeur du RESA de 0,40 étant atteinte, la distillation est stoppée par remise du fluide caloporteur à une valeur de consigne de 60-75°C. L'équilibre thermique étant atteint dans le réacteur, on introduit 7,75 g. d'une solution à 2 % en poids d'éthylèneglycoldiglycidyléther.

### séquence h)

On monte la température de consigne à 115-130°C pour éliminer l'eau et l'heptane. Après évaporation complète, on obtient un polymère superabsorbant sous forme d'une poudre constituée d'agglomérats de billes, dont le passant au tamis de 100 microns est inférieur à 1 %. Son absorption d'eau salée est de 55 g/g de polymère.

**Exemple 2 comparatif** : coquille mal formée par fixation du RESA à un mauvais niveau.

Le déroulement de l'essai est identique à celui de l'exemple 1, sauf pour la séquence f conduite de façon à ce que le RESA soit de 0,2.

La poudre obtenue a un passant à 100 microns inférieur à 1 %. Son absorption d'eau salée est de 55 g/g.

**Exemple 3 comparatif :** contre exemple d'une réticulation homogène ; absence de structure "coeur-coquille".

L'exemple est identique à l'exemple 1 sauf :
- séquence b : 1,09 g. d'une solution à 2 % en poids d'éthylèneglycoldiglycidyléther,
- séquence d : 1,09 grammes d'une solution aqueuse à 2 % d'éthylèneglycoldiglycidyléther,
- séquence f : RESA = 0,2,
- séquence g : pas de "réticulant coquille".

La poudre obtenue a un passant à 100 microns inférieur à 1 %. Son absorption d'eau salée est de 55 g/g.

### Exemple 4 : exemple de particules sphériques individuelles non agglomérées, mais à structure "coeur-coquille".

L'exemple est identique à l'exemple 1 sauf :
- séquence b : 0,39 g. d'une solution à 2 % en poids d'éthylèneglycoldiglycidyléther,
- pas de séquence d ni de séquence e : on enchaîne directement avec la séquence f, en remontant la température du réacteur à 120°C dès que la polymérisation est terminée.

La poudre obtenue a un passant à 100 microns inférieur à 30 %. Son absorption d'eau salée est de 55 g/g.

### Exemple 5 comparatif

On procède comme dans l'exemple 1, sauf :
- séquence b : 1,09 g. d'une solution à 2 % en poids d'éthylèneglycoldiglycidyléther,
- séquence f : RESA = 0,3.
- séquence g : 1,5 g d'une solution à 2 % en poids d'éthylèneglycoldiglycidyléther

La poudre obtenue a un passant à 100 microns inférieur à 1 %. Son absorption d'eau salée est de 57 g/g.

### Récapitulatif des exemples 1 à 5

Le tableau ci-dessous rassemble les propriétés mécaniques (modules en Pa), de porosité (grammes de fluide récolté en 10 minutes), d'absorption sous charge en lit épais en g/g, valeurs de RESA et les teneurs en post réticulant utilisées.

| | Ex. 1 | Ex. 2 comparatif | Ex. 3 comparatif | Ex. 4 | Ex. 5 comparatif |
|---|---|---|---|---|---|
| Type de poudre | Aggl. | Aggl. | Aggl. | Sph. | Aggl. |
| Absorption saline | 55 | 55 | 55 | 55 | 57 |
| Passant à 100 *µ*m | < 1 % | < 1% | < 1 % | < 30 % | < 1 % |
| Module (Pa) | 55.000 | 25.000 | 15.000 | 45.000 | 25.000 |
| Porosité | 1 000 | 50 | 5 | 500 | 50 |
| Absorption sous charge | 24 | 15 | 5 | 20 | 20 |
| RESA | 0,40 | 0,20 | 0,20 | 0,40 | 0,3 |
| Réticulant (ppm) | 720 | 720 | 720 | 720 | 360 |

Le produit de l'exemple 1 est un superabsorbant aggloméré typique de l'invention.

Le produit de l'exemple 2 est le résultat d'un post-traitement à RESA inférieur à la valeur critique. On l'interprète comme un superabsorbant à coquille mal formée malgré le taux élevé de réticulant. Ses propriétés sont intermédiaires ou médiocres.

Le produit de l'exemple 3 n'a pas subi de post-réticulation. Ses propriétés sont franchement mauvaises.

Le produit de l'exemple 4 est une poudre de particules sphériques non agglomérées post-réticulées selon l'invention. Ses propriétés sont bonnes.

Le produit de l'exemple 5 est constitué d'agglomérats de particules dont la coquille n'est probablement pas assez épaisse.

## Revendications

1. Une poudre de particules à structure « coeur-coquille » qui sont constituées d'un polymère superabsorbant partiellement réticulé ayant un gradient de réticulation partielle têt que la coquille des particules soit plus dure et moins souple que le coeur de celle-ci, ladite poudre ayant une capacité d'absorption d'au moins 50 g/g d'eau saline à 0,9 % et un module mécanique supérieur à 35 000 Pa, dans laquelle un lit de gel de 1,5 g desdites particules a une capacité d'absorption d'eau saline d'au moins 20 g/g sous une charge de 5kPa et dans laquelle le lit de gel a une porosité d'au moins 500 g, et dans laquelle les particules ont une granulométrie comprise entre 30 et 1500 µm.

2. La poudre de particules à structure « coeur-coquille » définie dans la revendication 1, dans laquelle 90% en poids des particules ont une granulométrie comprise entre 100 et 800 µm.

3. La poudre de particules à structure « coeur-coquitte » définie dans l'une des revendications 1 ou 2 dans laquelle ladite poudre a une capacité d'absorption d'eau saline à 0,9 % comprise entre 50 et 57 g/g.

4. La poudre de particules à structure « coeur-coquille » définie dans l'une quelconque des revendications 1 à 3 dans laquelle la poudre a un module mécanique compris entre 35 000 et 60 000 Pa.

5. La poudre de particules à structure « coeur-coquille » définie dans l'une quelconque des revendications 1 à 4 dans laquelle la poudre est constituée de particules sphériques.

6. La poudre de particules à structure « coeur-coquille » définie dans l'une quelconque des revendications 1 à 5 dans laquelle la poudre est constituée d'agglomérats.

7. La poudre de particules à structure « coeur-coquille » définie dans l'une quelconque des revendications 1 à 6 dans laquelle le polymère superabsorbant est obtenu à partir d'acide acrylique ou d'acide méthacrylique ou de leurs sels.

8. La poudre de particules à structure « coeur-coquille » définie dans l'une quelconque des revendications 1 à 7, dans laquelle le polymère superabsorbant est obtenu à partir d'acrylamine, d'acide vinylsuifonique ou ses sels, d'acide acrylamidométhylpropane suifonique ou ses sels, de N-vinyl-pyrolidone ou d'acide styrène sulfonique ou ses sels.

9. Un gel aqueux comportant de l'eau salée à 0,9 g d'une poudre de particules à structure « coeur-coquille » telle que définie dans l'une quelconque des revendications 1 à 8.

10. Un procédé de préparation d'une poudre de particules à structure « coeur-coquille » telle que définie dans l'une quelconque des revendications 1 à 8 dans lequel une post-réticulation à l'aide d'une solution aqueuse de l'agent de réticulation est appliquée à une poudre humide de particules dudit polymère superabsorbant en suspension dans l'heptane, de façon à obtenir un gradient de réticulation tel que la coquille des particules soit plus dure et moins souple que le coeur de celle-ci, la teneur en eau dudit polymère superabsorbant en suspension étant de 0,30 à 0,50 exprimée en poids d'eau rapporté au poids du polymère superabsorbant anhydre, ladite poudre ayant un module mécanique supérieur à 35000 Pa.

11. Le procédé défini dans la revendication 10, dans lequel le traitement de post-réticulation partielle est effectué avec une solution aqueuse d'un diglycidyléther de diol.

12. Le procédé défini dans la revendication 11, dans lequel le diglycidyléther de diol est l'éthylèneglycoldiglycidyléther.

13. Le procédé défini dans la revendication 10, 11 ou 12, dans lequel la post-réticulation partielle est effectuée sur lesdites particules du polymère de superabsorbant en suspension inverse dans de l'heptane.

## Claims

1. A powder of particles having a "core/shell" structure, which are formed from a partially crosslinked superabsorbent polymer having a partial crosslinking gradient such that the shell of the particles is harder and less flexible than the core of the latter, the said powder having an absorptivity of at least 50 g/g of 0.9% saline water and a mechanical modulus of greater than 35 000 Pa, in which powder a gel bed of 1.5 g of the said particles has a saline water absorptivity of at least 20 g/g under a load of 5 kPa, in which the gel bed has a porosity of at least 500 g and in which the particles have a particle size of between 30 and 1500 µm.

2. The powder of particles having a "core/shell" structure defined in Claim 1, in which 90% by weight of the particles have a particle size of between 100 and 800 µm.

3. The powder of particles having a "core/shell" structure defined in either of Claims 1 and 2, in which the said powder has a 0.9% saline water absorptivity of between 50 and 57 g/g.

4. The powder of particles having a "core/shell" structure defined in any one of Claims 1 to 3, in which the powder has a mechanical modulus of between 35 000 and 60 000 Pa.

5. The powder of particles having a "core/shell" structure defined in any one of Claims 1 to 4, in which the powder is formed from spherical particles.

6. The powder of particles having a "core/shell" structure defined in any one of Claims 1 to 5, in which the powder is formed from agglomerates.

7. The powder of particles having a "core/shell" structure defined in any one of Claims 1 to 6, in which the superabsorbent polymer is obtained from acrylic acid or from methacrylic acid or from salts thereof.

8. The powder of particles having a "core/shell" structure defined in any one of Claims 1 to 7, in which the superabsorbent polymer is obtained from acrylamine, from vinylsulphonic acid or its salts, from acrylamidomethylpropanesulphonic acid or its salts, from N-vinylpyrrolidone or from styrenesulphonic acid or its salts.

9. An aqueous gel comprising salt water containing 0.9 g of a powder of particles having a "core/shell" structure as defined in any one of Claims 1 to 8.

10. A process for producing a powder of particles having a "core/shell" structure as defined in any one of Claims 1 to 8, in which a postcrosslinking treatment is applied, using an aqueous solution of the crosslinking agent, to a wet powder of particles of the said superabsorbent polymer in suspension in heptane, so as to obtain a crosslinking gradient such that the shell of the particles is harder and less flexible than the core of the latter, the water content of the said suspended superabsorbent polymer being 0.30 to 0.50 expressed as the weight of water relative to the weight of the anhydrous superabsorbent polymer, the said powder having a mechanical modulus of greater than 35 000 Pa.

11. The process defined in Claim 10, in which the partial postcrosslinking treatment is carried out using an aqueous solution of a diol diglycidyl ether.

12. The process defined in Claim 11, in which the diol diglycidyl ether is ethylene glycol diglycidyl ether.

13. The process defined in Claim 10, 11 or 12, in which the partial postcrosslinking treatment is carried out on the said particles of the superabsorbent polymer in inverse suspension in heptane.

## Patentansprüche

1. Pulver aus Partikeln mit einer "Kern-Schale"-Struktur, die aus einem superabsorbierenden, teilweise vernetzten Polymer mit einem derartigen teilweisen Vernetzungsgrad bestehen, dass die Schale der Partikel härter und weniger elastisch ist als ihr Kern, wobei das Pulver eine Absorptionskapazität für 0,9%ige Salzlösung von mindestens 50 g/g und ein mechanisches Modul von mehr als 35000 Pa hat, wobei ein Gelbett von 1,5 g der Partikel eine Absorptionskapazität für Salzlösung von mindestens 20 g/g unter einer Last von 5 kPa hat und das Gelbett eine Porosität von mindestens 500 g aufweist und die Partikel eine Granulometrie zwischen 30 und 1500 µm besitzen.

2. Pulver aus Partikeln mit einer "Kern-Schale"-Struktur nach Anspruch 1, wobei 90 Gew.-% der Partikel eine Granulometrie zwischen 100 und 800 µm besitzen.

3. Pulver aus Partikeln mit einer "Kern-Schale"-Struktur nach einem der Ansprüche 1 oder 2, wobei das Pulver eine Absorptionskapazität für 0,9%ige Salzlösung zwischen 50 und 57 g/g besitzt.

4. Pulver aus Partikeln mit einer "Kern-Schale"-Struktur nach einem der Ansprüche 1 bis 3, wobei das Pulver ein mechanisches Modul zwischen 35000 und 60000 Pa hat.

5. Pulver aus Partikeln mit einer "Kern-Schale"-Struktur nach einem der Ansprüche 1 bis 4, wobei das Pulver aus sphärischen Partikeln besteht.

6. Pulver aus Partikeln mit einer "Kern-Schale"-Struktur nach einem der Ansprüche 1 bis 5, wobei das Pulver aus Agglomeraten besteht.

7. Pulver aus Partikeln mit einer "Kern-Schale"-Struktur nach einem der Ansprüche 1 bis 6, wobei das superabsorbierende Polymer aus Acrylsäure oder Methacrylsäure oder deren Salzen erhalten wird.

8. Pulver aus Partikeln mit einer "Kern-Schale"-Struktur nach einem der Ansprüche 1 bis 7, wobei das superabsorbierende Polymer aus Acrylamin, Vinylsulfonsäure oder deren Salzen, Acrylamidomethylpropansulfonsäure oder deren Salzen, N-Vinylpyrrolidon oder Styrolsulfonsäure oder deren Salzen erhalten wird.

9. Wässriges Gel, das 0,9 g Salzlösung enthält, aus einem Pulver aus Partikeln mit einer "Kern-Schale"-Struktur nach einem der Ansprüche 1 bis 8.

10. Verfahren zur Herstellung eines Pulvers aus Partikeln mit einer "Kern-Schale"-Struktur nach einem der Ansprüche 1 bis 8, wobei eine Nachvernetzung mithilfe einer wässrigen Lösung des Vernetzungsmittels auf ein feuchtes Pulver aus Partikeln des in Heptan suspendierten, superabsorbierenden Polymers angewendet wird, so dass ein Vernetzungsgradient derart erhalten wird, dass die Schale der Partikel härter und weniger elastisch als ihr Kern ist, wobei der Gehalt des suspendierten, superabsorbierenden Polymers an Wasser 0,30 bis 0,50 beträgt, ausgedrückt als das Gewicht des Wassers bezogen auf das Gewicht des wasserfreien superabsorbierenden Polymers, wobei das Pulver ein mechanisches Modul von mehr als 35000 Pa besitzt.

11. Verfahren nach Anspruch 10, wobei die teilweise Nachvernetzungsbehandlung mit einer wässrigen Lösung eines Dioldiglycidylethers erfolgt.

12. Verfahren nach Anspruch 11, wobei es sich bei dem Dioldiglycidylether um Ethylenglycoldiglycidylether handelt.

13. Verfahren nach Anspruch 10, 11 oder 12, wobei die teilweise Nachvernetzung an den Partikeln des superabsorbierenden Polymers in inverser Suspension in Heptan erfolgt.
